Europäisches Patentamt

(19) European Patent Office

Office européen des brevets

(11) Veröffentlichungsnummer: **0 352 526 B1**

(12) **EUROPÄISCHE PATENTSCHRIFT**

(45) Veröffentlichungstag der Patentschrift:
13.11.91 Patentblatt 91/46

(51) Int. Cl.⁵: **F16H 1/40**

(21) Anmeldenummer: **89112444.8**

(22) Anmeldetag: **07.07.89**

---

(54) **Differential.**

---

(30) Priorität: 26.07.88 US 226336

(43) Veröffentlichungstag der Anmeldung:
31.01.90 Patentblatt 90/05

(45) Bekanntmachung des Hinweises auf die
Patenterteilung:
13.11.91 Patentblatt 91/46

(84) Benannte Vertragsstaaten:
AT BE DE ES FR GB IT NL SE

(56) Entgegenhaltungen:
EP-A- 0 118 261
DE-A- 2 110 012
DE-A- 3 116 800
DE-A- 3 236 227
GB-A- 1 242 531
US-A- 696 704
US-A- 4 467 672

(73) Patentinhaber: DEERE & COMPANY
1 John Deere Road
Moline, Illinois 61265 (US)

(72) Erfinder: Erdmann, Alan J.
2559 Saratoga Drive
Waterloo Iowa 50701 (US)
Erfinder: Shirley, Ralph E.
1429 Jersey Lane
Waterloo Iowa 50701 (US)

(74) Vertreter: Feldmann, Bernhard et al
DEERE & COMPANY European Office, Patent
Department Steubenstrasse 36-42 Postfach
503
W-6800 Mannheim 1 (DE)

## Beschreibung

Die Erfindung bezieht sich auf ein Differential mit einem umlaufenden Differentialgehäuse und mindestens einer in das Differentialgehäuse mit ihrem äußeren Ende einsetzbaren, ein Ausgleichskegelritzel drehbar aufnehmenden und um ihre Längsachse undrehbaren Ritzelwelle, die mit ihrem inneren Ende in einen Zentralteil eingreift, wobei das Ausgleichskegelritzel mit zwei auf je einer Ausgangswelle drehfest angeordneten Antriebskegelrädern kämmt.

Bei diesem bekannten Differential (US-A-696704) sind mehrere Ritzelwellen senkrecht zu den Ausgangswellen angeordnet und mit ihren inneren Enden in den Zentralteil eingeschraubt, der auf den einander zugelegenen Stirnenden der Ausgangswellen drehbar gelagert ist. Das Differentialgehäuse ist in der Ebene der Ritzelwelle teilbar ausgebildet und wird über Schrauben zusammengehalten, die auch durch die Ritzelwellen geführt sind. Hierdurch wird eine Drehung der Ritzelwellen um ihre Längsachsen vermieden. Insbesondere durch das Durchbohren der Ritzelwellen und das Vorsehen von Innen- und Außengewinde entsteht eine kostenaufwendige Ausbildung.

Die der Erfindung zugrunde liegende Aufgabe wird in einer einfacheren Anordnung und Ausbildung der Ritzelwellen, insbesondere zum Verhindern deren Drehung um ihre Längsachsen, gesehen. Diese Aufgabe ist dadurch gelöst worden, daß der Zentralteil eine ringförmige Schiene, Nut oder dergleichen aufweist, auf der bzw. in der das innere Ende der Ritzelwelle derart geführt ist, daß eine Drehung der Ritzelwelle um ihre Längsachse ausgeschlossen ist. Auf diese Weise wird ein Eingriff zwischen den vorgesehenen Ritzelwellen und dem Zentralteil erreicht, der ein Drehen der Ritzelwellen um ihre Längsachsen ausschließt, jedoch bei Kurvenfahrten ein Ablaufen der Ritzelwellen auf dem Zentralteil zuläßt. Die ineinandergreifenden Teile sind dabei so ausgebildet, daß außerdem die Bewegung der Ritzelwellen nach innen begrenzt ist.

Nach der Erfindung läßt sich eine besonders kostengünstige Ausbildung dann erreichen, wenn die ringförmige Schiene, Nut oder dergleichen an einer der Ausgangswellen vorgesehen ist, so daß kein zusätzliches Element erforderlich wird. Je nach den Einsatzbedingungen kann aber ein zusätzliches Element wünschenswert sein, weshalb erfindungsgemäß auch vorgesehen werden kann, daß der Zentralteil mit der ringförmigen Schiene, Nut oder dergleichen zwischen den beiden Ausgangswellen vorgesehen ist.

Im einzelnen kann der Zentralteil als zylindrische Scheibe ausgebildet sein und das innere Ende der Ritzelwelle eine Nut aufweisen, in die die Scheibe eingreift, wobei die zylindrische Scheibe einen größeren Außendurchmesser als die Ausgangswellen aufweist.

Andererseits ist es nach der Erfindung auch möglich, daß das innere Ende der Ritzelwelle mit einer vorspringenden Nase versehen ist, die in eine ringförmige Nut am Zentralteil eingreift, oder daß in die Nut am Zentralteil ein Sprengring einsetzbar ist, der in die Nut am inneren Ende der Ritzelwelle eingreift.

Wenn nach einem weiteren Vorschlag der Erfindung der Zentralteil als zylindrischer Teil ausgebildet ist, der zwischen den Ausgangswellen und in deren Stirnseiten gelagert ist, kann der Zentralteil auch noch als zusätzliche Zentrierung dienen.

Eine Bewegung der Ritzelwelle nach außen wird erfindungsgemäß dann in einfacher Weise vermieden, wenn die Ritzelwelle mit ihrem äußeren Ende in eine Bohrung im Differentialgehäuse einsetzbar ist und einen Anschlag aufweist, der mittel- oder unmittelbar gegen die Unterseite des Ausgleichskegelritzels anliegt, wobei der Anschlag aus einem Sprengring gebildet ist, der in eine Ringnut in der Ritzelwelle einsetzbar ist.

In der Zeichnung sind mehrere nachfolgend näher erläuterte Ausführungsbeispiele der Erfindung dargestellt. Es zeigt:

Fig. 1          ein teilweise dargestelltes Differential im Schnitt,
Fig. 2          eine weitere Ausführungsform eines Differentials, ebenfalls im Schnitt, und
Fig. 3 bis 5    weitere Ausführungsformen von Ritzelwelle und Zentralteil.

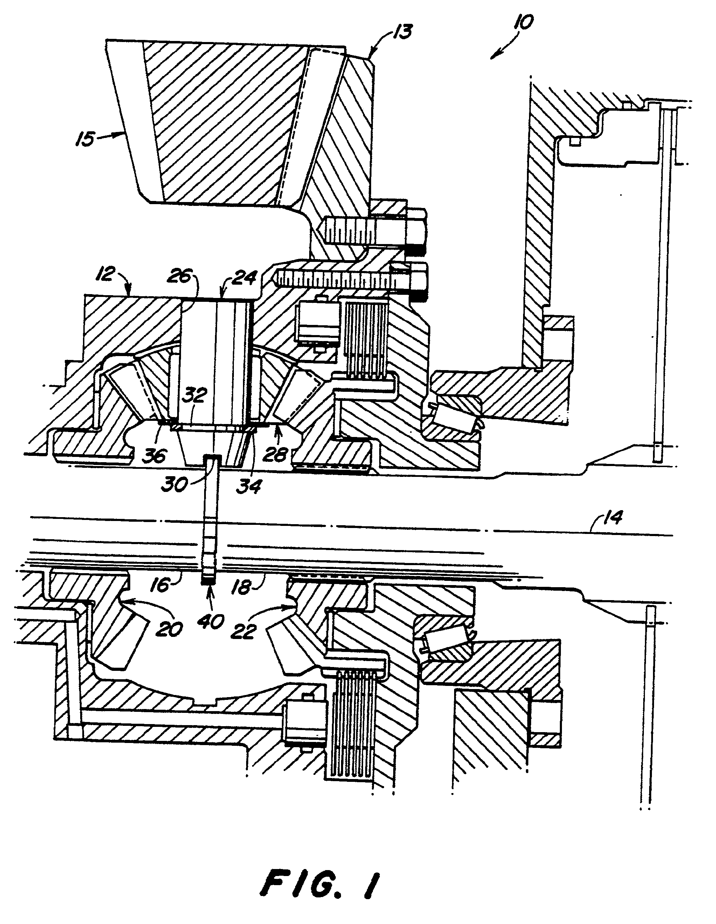

Das in Fig. 1 der Zeichnung teilweise dargestellte Differential 10 gehört zu einem nicht gezeichneten Fahrzeuggetriebe und weist ein Differentialgehäuse 12 auf, das um eine Hauptachse 14 umläuft. In das Differentialgehäuse 12 sind von der rechten und linken Seite je eine Ausgangswelle 16 und 18 gesteckt, deren Längsachsen mit der Hauptachse 14 zusammenfallen und die über das Differentialgehäuse 12 antreibbar sind. Hierzu sind Antriebskegelräder 20 und 22 bzw. Sonnenräder auf die Ausgangswellen 16 und 18 drehfest aufgesetzt, die mit Ausgleichskegelritzel 28 kämmen. Zum Antrieb des Differentialgehäuses 12 ist ein mit diesem verflanschtes Tellerrad 13 vorgesehen, das über eine nicht dargestellte Hauptwelle antreibbar ist, an deren Ende ein Kegelrad 15 vorgesehen ist. Das Kegelrad 15 kann auch als Stirn- oder Schneckenrad ausgebildet sein, und selbstverständlich kann der Hauptantrieb auch durch andere Antriebe, wie einen Ketten- oder Riementrieb, ersetzt werden.

Die Ausgleichskegelritzel 28, beim bevorzugten Ausführungsbeispiel sind drei vorgesehen, sind drehbar

2

EP 0 352 526 B1

von je einer Ritzelwelle 24, von denen in der Zeichnung nur eine dargestellt ist, aufgenommen. Jede Ritzelwelle 24 ist senkrecht zu der Hauptachse 14 angeordnet, und ihre äußeren Enden sind in Bohrungen 26, die in das Differentialgehäuse 12 eingearbeitet sind, gelagert. Die inneren Enden der Ritzelwellen 24 sind stumpfkegelig ausgebildet und mit je einer zum inneren Ende hin offenen Nut 30 versehen. Des weiteren ist in jede Ritzelwelle 24 noch eine sich um die Mantelfläche erstreckende Ringnut 36 eingearbeitet, in der ein Sprengring 34 aufgenommen werden kann. Der Sprengring 34 hält einen Tellerring 36, der mit seiner anderen Seite gegen die jeweilige Unterseite des betreffenden Ausgleichskegelritzels 28 anliegt, wodurch die radial nach außen gerichtete Bewegung der Ritzelwellen 24 begrenzt wird.

Die nach innen gerichtete Bewegung der Ritzelwellen 24 wird durch einen Zentralteil in Form einer zylindrischen Scheibe 40 begrenzt, die zwischen den Ausgangswellen 16 und 18 vorgesehen sein kann, einen größeren Durchmesser als die Ausgangswellen aufweist und in die Nuten 30 der Ritzelwellen 24 eingreift. Auf diese Weise werden die Ritzelwellen 24 zusätzlich noch an einer Drehung um ihre Längsachsen gehindert.

Auf die Funktionsweise des vorstehend beschriebenen Differentials 10 braucht nur kurz eingegangen zu werden, da sie den einschlägigen Fachleuten hinreichend bekannt ist. Erwähnt sei lediglich, daß sich bei Geradeausfahrt das angetriebene Tellerrad 13, das Differentialgehäuse 12 mit den Ausgleichskegelritzeln 29 sowie die Antriebskegelräder 20, 22 mit den Ausgangswellen 16 und 18 mit der gleichen Drehzahl drehen. Die Ausgleichskegelritzel drehen sich dabei nicht um ihre eigenen Achsen. Dies erfolgt erst bei Kurvenfahrten bzw. bei ungleichen Fahrwiderständen, wobei sich das rechte oder linke Antriebskegelrad 22 bzw. 20 um so viel schneller dreht, als das andere Antriebskegelrad zurückbleibt, da dann die Ausgleichskegelritzel an dem zurückbleibenden Antriebskegelrad ablaufen. Eine Drehung der Ritzelwellen um ihre Längsachsen ist dabei unerwünscht, was nach der Ausführung nach Fig. 1 durch den Eingriff der Scheibe 40 in die Nuten 30 der Ritzelwellen auch in einfacher Weise verhindert wird. Diese Ausschaltung der Drehbewegung kann aber im Rahmen der Erfindung auch dann erreicht werden, wenn die Scheibe 40 mit einer der Ausgangswellen 16 bzw. 18 fest verbunden oder auf einer der Ausgangswellen drehbar gelagert ist.

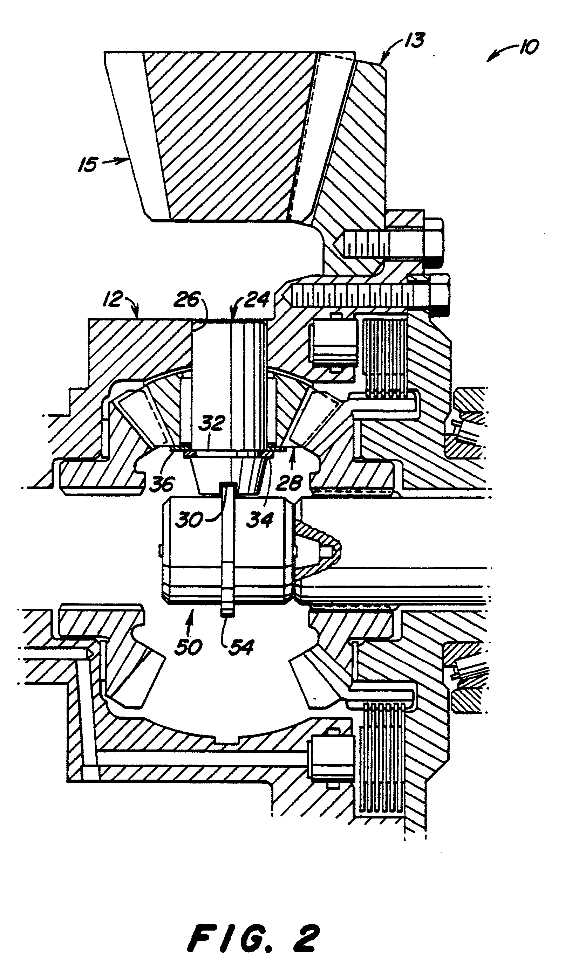

Eine weitere Ausführungsform ist in Fig. 2 dargestellt, in der die Scheibe 40 durch einen zylindrischen Teil 50 mit einer Zylinderschulter 54 ersetzt ist, die radial vorspringt und damit in die Nuten 30 der Ritzelwellen 24 eingreifen kann. Der zylindrische Teil 50 kann dabei in einer oder beiden Ausganswellen 16 oder 18 gelagert sein und diese noch zusätzlich zentrieren, wobei die Zylinderschulter 54 in den Teil 50 integriert ist oder durch einen in eine gemäß Fig. 5 im Teil 50' eingearbeitete Nut 72 einsetzbaren Sprengring 80 gebildet werden kann.

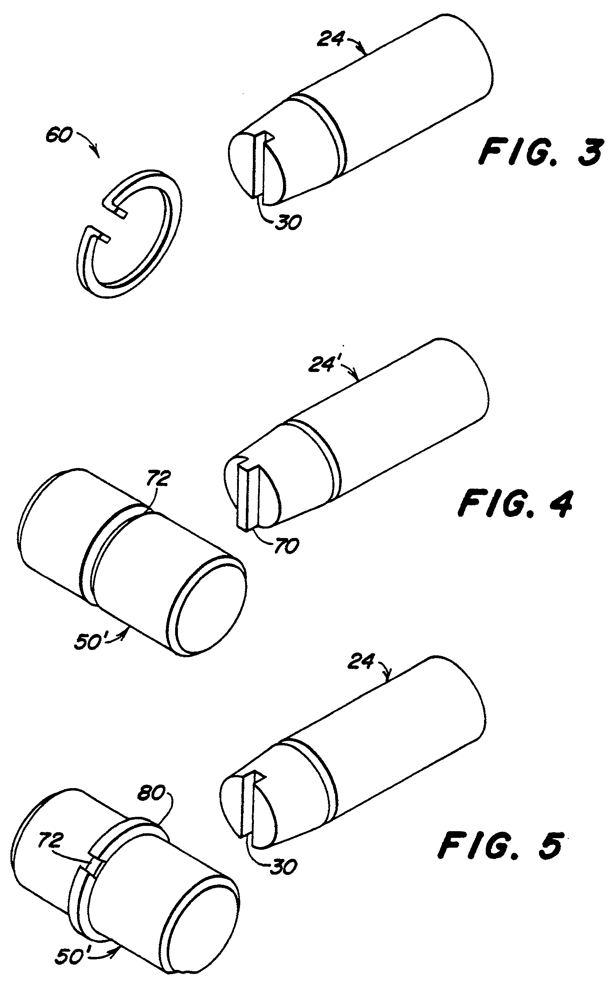

In Fig. 3 ist ein weiteres Ausführungsbeispiel wiedergegeben, und zwar ist dort die Scheibe 40 nach Fig. 1 durch einen Sprengring 60 ersetzt, der ebenfalls in die Nuten 30 eingreifen kann. Zapfen an dem Sprengring verhindern dessen Drehung, sobald sie gegen die innere Stirnfläche der Ritzelwellen neben deren Nut zur Anlage kommen.

In der Ausführung nach Fig. 4 ist die Ritzelwelle 24' mit einer Nase 70 versehen, die wiederum von einer Ringnut 72 im zylindrischen Teil 50' aufgenommen werden kann.

Die verschiedenen vorstehend vorgestellten Beispiele lassen sich natürlich auch miteinander kombinieren, beispielsweise wenn in eine der Ausgangswellen eine Nut eingearbeitet ist und in diese ein Sprengring eingesetzt wird oder in diese an den inneren Stirnseiten der Ritzelwellen vorgesehene Nasen eingreifen.

**Patentansprüche**

1. Differential (10) mit einem umlaufenden Differentialgehäuse (12) und mindestens einer in das Differentialgehäuse (12) mit ihrem äußeren Ende einsetzbaren, ein Ausgleichskegelritzel (28) drehbar aufnehmenden und um ihre Längsachse undrehbaren Ritzelwelle (24), die mit ihrem inneren Ende in einen Zentralteil (40) eingreift, wobei das Ausgleichskegelritzel (28) mit zwei auf je einer Ausgangswelle (16, 18) drehfest angeordneten Antriebskegelrädern (20, 22) kämmt, dadurch gekennzeichnet, daß der Zentralteil (40) eine ringförmige Schiene, Nut oder dergleichen aufweist, auf der bzw. in der das innere Ende der Ritzelwelle (24) derart geführt ist, daß eine Drehung der Ritzelwelle (24) um ihre Längsachse ausgeschlossen ist.

2. Differential (10) nach Anspruch 1, dadurch gekennzeichnet, daß die ringförmige Schiene, Nut oder dergleichen an einer der Ausgangswellen (16, 18) vorgesehen ist.

3. Differential (10) nach Anspruch 1, dadurch gekennzeichnet, daß der Zentralteil mit der ringförmigen Schiene, Nut oder dergleichen zwischen den beiden Ausgangswellen (16, 18) vorgesehen ist.

4. Differential (10) nach einem oder mehreren der vorherigen Ansprüche, dadurch gekennzeichnet, daß der Zentralteil als zylindrische Scheibe (40) ausgebildet ist und das innere Ende der Ritzelwelle (24) eine Nut (30) aufweist, in die die Scheibe (40) eingreift.

5. Differential (10) nach Anspruch 4, dadurch gekennzeichnet, daß die zylindrische Scheibe (40) einen größeren Außendurchmesser als die Ausgangswellen (16, 18) aufweist.

3

6. Differential (10) nach einem oder mehreren der Ansprüche 1 bis 3, dadurch gekennzeichnet, daß das innere Ende der Ritzelwelle (24) mit einer vorspringenden Nase (70) versehen ist, die in eine ringförmige Nut (72) am Zentralteil eingreift.

7. Differential (10) nach einem oder mehreren der vorherigen Ansprüche, dadurch gekennzeichnet, daß in die Nut (72) am Zentralteil ein Sprengring (80) einsetzbar ist, der in die Nut (30) am inneren Ende der Ritzelwelle (24) eingreift.

8. Differential (10) nach einem oder mehreren der vorherigen Ansprüche, dadurch gekennzeichnet, daß der Zentral teil als zylindrischer Teil (50, 50') ausgebildet ist, der zwischen den Ausgangswellen (16, 18) und in deren Stirnseiten gelagert ist.

9. Differential (10) nach einem oder mehreren der vorherigen Ansprüche, dadurch gekennzeichnet, daß die Ritzelwelle (24) mit ihrem äußeren Ende in eine Bohrung (26) im Differentialgehäuse (12) einsetzbar ist und einen Anschlag aufweist, der mittel- oder unmittelbar gegen die Unterseite des Ausgleichskegelritzels (28) anliegt.

10. Differential (10) nach Anspruch 9, dadurch gekennzeichnet, daß der Anschlag aus einem Sprengring (34) gebildet ist, der in eine Ringnut (32) in der Ritzelwelle (24) einsetzbar ist.

## Claims

1. Differential (10) with a rotating housing (12) and at least one pinion shaft (24) insertable with its outer end into the differential housing (12), and receiving a differential bevel pinion (28) rotatably and non-rotatable about its longitudinal axis and which engages by its inner end with a central part (40), the differential bevel pinion (28) meshing with two bevel drive gears (20, 22) each arranged rotationally fast on a respective output shaft (16, 18), characterised in that the central part (40) has an annular rim, groove or the like on which or in which the inner end of the pinion shaft (24) is so guided that any rotation of the pinion shaft (24) about its longitudinal axis is impossible.

2. Differential (10) according to claim 1, characterised in that the annular rim, groove or the like is provided on one of the output shafts (16, 18).

3. Differential (10) according to claim 1, characterised in that the central part with the annular rim, groove or the like is provided between the two outputs shafts (16, 18).

4. Differential (10) according to one or more of the preceding claims, characterised in that the central part is in the form of a cylindrical disc (40) and the inner end of the pinion shaft (24) has a groove (30) in which the disc (40) engages.

5. Differential (10) according to claim 4, characterised in that the cylindrical disc (40) has a larger outer diameter than the output shafts (16, 18).

6. Differential (10) according to one or more of claims 1 to 3, characterised in that the inner end of the pinion shaft (24) is provided with a projecting lug (70) which engages in an annular groove (72) on the central part.

7. Differential (10) according to one or more of the preceding claims, characterised in that a snap ring (80) can be inserted in the groove (72) on the central part and engages in the groove (30) at the inner end of the pinion shaft (24).

8. Differential (10) according to one or more of the preceding claims, characterised in that the central part is in the form of a cylindrical part (50, 50') which is mounted between the output shafts (16, 18) and in their front faces.

9. Differential (10) according to one or more of the preceding claims, characterised in that the pinion shaft (24) can be inserted at its outer end in a bore (26) in the differential housing (12) and has a stop which bears directly or indirectly against the underside of the differential bevel pinion (28).

10. Differential (10) according to claim 9, characterised in that the stop is formed from a snap ring (34) which can be inserted in an annular groove (32) in the pinion shaft (24).

## Revendications

1. Différentiel (10) comportant un carter qui le contient (12) et au moins un arbre de pignon (24), qui peut être inséré par son extrémité extérieure dans le carter (12) du différentiel, qui reçoit, avec possibilité de rotation, un pignon conique compensateur (28), qui ne peut pas tourner autour de son axe longitudinal et qui s'engage, par son extrémité intérieure, dans une partie centrale (40), le pignon conique compensateur (28) engrenant avec deux pignons coniques d'entraînement (20, 22) montés résistants à la rotation, chacun sur arbre de sortie (16, 18), caractérisé par le fait que la partie centrale (40) comporte un rail, une gorge ou analogue de forme annulaire, sur ou dans le ou laquelle l'extrémité intérieure de l'arbre de pignon (24) est guidée de telle sorte qu'une rotation de l'arbre de pignon (24) autour de son axe longitudinal soit exclue.

2. Différentiel (10) selon la revendication 1, caractérisé en ce que le rail, la gorge ou analogue de forme annulaire est prévu sur l'un des arbres de sortie (16,18).

3. Différentiel (10) selon la revendication 1, caractérisé par le fait que la partie centrale pourvue du rail, de la gorge ou analogue de forme annulaire est prévue entre les deux arbres de sortie (16, 18).

4. Différentiel (10) selon une ou plusieurs des revendications précédentes, caractérisé en ce que la partie centrale est réalisée sous la forme d'un disque cylindrique (40) et l'extrémité intérieure de l'arbre de pignon (24) comporte une gorge (30) dans laquelle s'engage le disque (40).

5. Différentiel (10) selon la revendication 4, caractérisé en ce que le disque cylindrique (40) présente un diamètre extérieur supérieur à celui des arbres de sortie (16, 18).

6. Différentiel (10) selon une ou plusieurs des revendications 1 à 3, caractérisé en ce que l'extrémité intérieure de l'arbre de pignon (24) comporte un bec saillant (70), qui s'engage dans une gorge annulaire (72) ménagée dans la partie centrale.

7. Différentiel (10) selon une ou plusieurs des revendications précédentes, caractérisé en ce que dans la gorge (72) ménagée sur la partie centrale peut être inséré un jonc (80), qui s'engage dans la gorge (30) ménagée à l'extrémité intérieure de l'arbre de pignon (24).

8. Différentiel (10) selon une ou plusieurs des revendications précédentes, caractérisé en ce que la partie centrale est réalisée sous la forme d'une pièce cylindrique (50, 50'), qui est montée entre les arbres de sortie (16, 18) et dans les faces frontales de ces arbres.

9. Différentiel (10) selon une ou plusieurs des revendications précédentes, caractérisé en ce que l'arbre de pignon (24) peut être inséré, par son extrémité extérieure, dans un perçage (26) ménagé dans le carter (12) du différentiel et est pourvu d'une butée qui s'applique indirectement ou directement contre la face inférieure du pignon conique compensateur (28).

10. Différentiel (10) selon la revendication 9, caractérisé en ce que la butée est constituée par un jonc (34), qui peut être inséré dans une gorge annulaire (32) ménagée dans l'arbre de pignon (24).

FIG. 1

FIG. 2

FIG. 3

FIG. 4

FIG. 5